(19) Europäisches Patentamt

European Patent Office

Office européen des brevets

(11) **EP 1 052 820 B1**

(12) **EUROPEAN PATENT SPECIFICATION**

(45) Date of publication and mention
of the grant of the patent:
**02.02.2005 Bulletin 2005/05**

(51) Int Cl.[7]: **H04L 27/233**

(21) Application number: **99303620.1**

(22) Date of filing: **10.05.1999**

(54) **Method and apparatus to determine the speed of mobile communications apparatus**

Verfahren zur Bestimmung der Geschwindigkeit einer Mobilstation in einem zellularen
Kommunikationssystem

Procédé d'estimation de la vitesse d'une station mobile dans un système cellulaire de
télécommunications

(84) Designated Contracting States:
**DE ES FI FR GB IT SE**

(43) Date of publication of application:
**15.11.2000 Bulletin 2000/46**

(73) Proprietor: **LUCENT TECHNOLOGIES INC.**
**Murray Hill, New Jersey 07974-0636 (US)**

(72) Inventors:
• **Flewitt, Adrian Robert**
**Lechlade, Gloucestershire GL7 3SB (GB)**
• **Luschi, Carlo**
**Oxford, Oxfordshire OX2 0QT (GB)**
• **Rumi, Emal Daham**
**Colerne, Chippenham, Wilts SN14 8EW (GB)**
• **Sandell, Magnus**
**Swindon, Wiltshire SN1 EPN (GB)**
• **Strauch, Paul Edward**
**Swindon, Wiltshire SN5 9GQ (GB)**
• **Yan, Ran**
**Longcot, Faringdon, Oxon SN7 7SS (GB)**

(74) Representative: **Williams, David John et al**
**Lucent Technologies UK Limited,**
**5 Mornington Road**
**Woodford Green, Essex IG8 0TU (GB)**

(56) References cited:
**US-A- 5 884 178**

**Description**

<u>Field of the Invention</u>

This invention relates to a method and apparatus for determining the speed of travel of a mobile telecommunications apparatus, such as in individual mobile telephone, for example in a GSM (Global System for Mobile Communications) system.

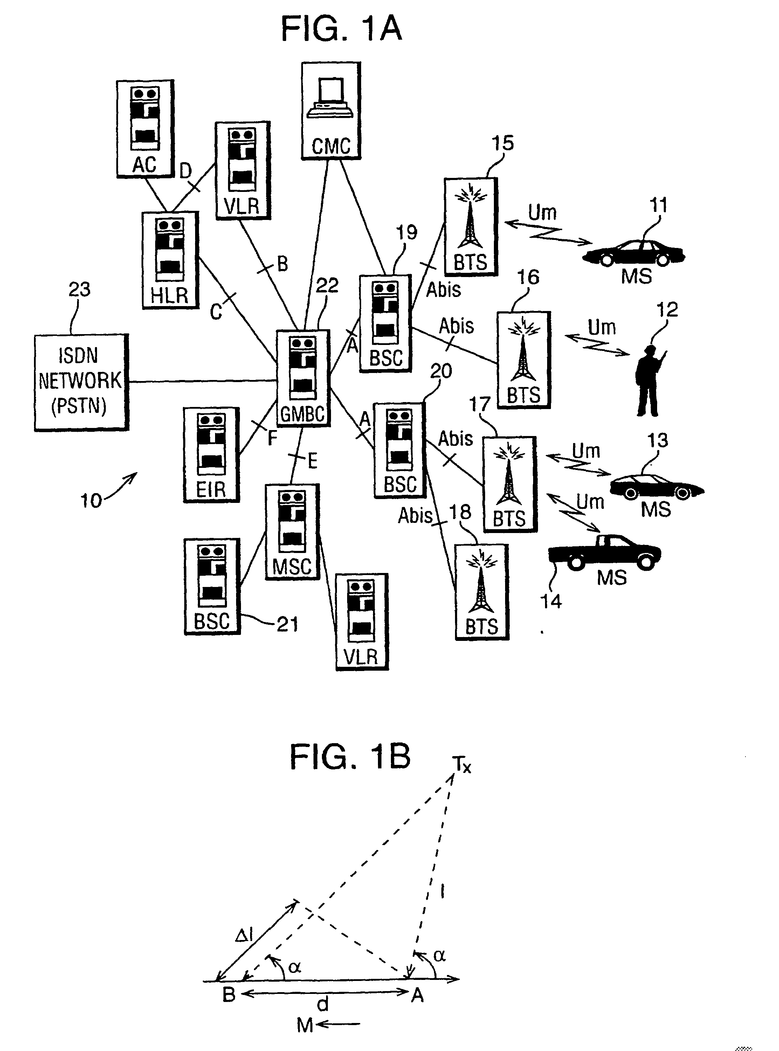

A typical wireless mobile telecommunications system 10 is shown in Figure 1A. The system comprises a number of users of mobile transceivers 11, 12, 13, 14, a number of base transceiver stations 15, 16, 17, 18, connected through Base Station Controllers (BSC) 19, 20, 21 to a Gateway Mobile Services Switching Centre (GMSC) 22. The GMSC is connected to the appropriate part of Public Switched Telephone Network 23.

A mobile telecommunications system is arranged to have spatial cells through which a mobile telephone travels. A recent development is to provide a two tier system having both small-area microcells, which provides increased network capacity by increasing frequency re-use, and large-area macrocells which reduce the number of hand-offs as a mobile telephone moves from one cell into the next.

Each hand-off requires network resources to redirect the call from one base station to the next, and as the time between hand-offs decreases the quality of service may be reduced.

It would be highly advantageous if fast-moving mobiles could be allocated to macrocells (to reduce the need for hand-offs) and slow-mobiles could be allocated to microcells, so that they can operate at a reduced power and cause significantly less interference, and minimise the number of hand-offs.

<u>Brief Description of the Prior Art</u>

Several methods of measuring the speed of a mobile have been suggested, but all have disadvantages. One common method is based on measurement of the cell sojourn time of the mobile, but errors may be introduced by the different hand-off strategies. Another method measures the signal strength at neighbouring base stations, but accurate measurements are not easy to make.

Three conventional methods utilise an estimation of maximum Doppler frequencies; the first infers the Doppler frequency from the level crossing rate, and the second infers the Doppler frequency from the switching rate of a diversity receiver, but neither can be used for GSM with frequency hopping. A third method infers the Doppler frequency from the squared deviations of the signal envelopes, but this is not always effective in the presence of multipath fading.

US-A-5 884 178 discloses a fourth method that entimates the Doppler frequency shift by averaging carrier frequency offsets over a number of signal bursts.

A GSM receiver provides estimates of the channel impulse response offset so that channel equalisation can be performed, but the estimated values have not been used for other purposes than estimating the transmitted data.

<u>Summary of the Invention</u>

According to the invention a method of determining the speed of a mobile user in a mobile telecommunications system comprises the steps of: (a) deriving a first signal related to a phase variation, in a time interval which is a burst or fraction of a burst, of one or more taps of an equivalent channel impulse response at the input of a channel equalizer in a base station receiver which receives the signal, (b) deriving a second signal related to the carrier frequency offset of the signal received in the base station receiver, (c) subtracting the second signal from the first signal, and (d) from the difference, deriving a third signal related to the Doppler frequency shift.

Also, according to the invention a mobile telecommunications system comprising at least one mobile transmitter/receiver and a base station having a transmitter/receiver, the base station receiver having a channel equalizer, there being further provided first means to derive a first signal related to a phase variation, in a time interval which is a burst or a fraction of a burst, of one or more taps of an equivalent channel impulse response at the input of the equalizer; second means to derive a second signal related to the carrier frequency offset of the signal received in the base station receiver; subtraction means to subtract the second signal from the first signal; and calculation means to calculate from the difference a third signal related to Doppler frequency shift of a signal received from a mobile transmitter/receiver.

Figure 1B illustrates the Doppler effect in a mobile system. A transmitter $T_x$ is shown transmitting at a distance $\ell$ from the mobile, which moves a distance d from A to B in the direction of the arrow M.

Even when the mobile is static, there is multi-path propagation from the transmitter Tx to the mobile, so that several versions of the transmitted signal arrive sequentially at the mobile. The effect of the different time delays is that different phase shifts are introduced between the signal wave components, and there is constructive or destructive addition, depending on the relative phases.

When either the transmitter or the mobile is in motion, then "dynamic" multipath propagation occurs in which a continuous change in the length of every propagation path appears. This causes changes in the relative phase shifts between the paths as a function of spatial location. The time variations in the propagation path lengths can be related directly to the relative motion of the transmitter and receiver and directly in the Doppler effects that arise. Figure 1B shows a propagation path from the transmitter arriving first at the mobile at point A along a path of length l, and then arriving at point B. The time differences between the two points is$\Delta$t. The mobile moved a distance of d between the two points where d = v$\Delta$t. There is an incremental change $\Delta l$ in the length of the path where $\Delta l$ = d cos $\alpha$ and $\alpha$ is the angle of arrival of the incoming signal with respect to motion of the mobile. The phase change caused is:

$$\Delta\emptyset = \frac{2\pi}{\lambda} \, \Delta l = \frac{2\pi v \Delta t}{\lambda} \cos \alpha \qquad\qquad A$$

The rate of change of phase due to motion appears as a Doppler frequency shift in each propagation path as follows:

$$fd = \frac{1}{2\pi} \frac{\Delta\emptyset}{\Delta t} = \frac{v}{\lambda} \cos\alpha \qquad\qquad C$$

The change in the path length depends on the spatial angle between the wave and the direction of moving. Waves arriving from ahead of the mobile have positive Doppler shift, while the ones arriving from behind the mobile will have a negative Doppler shift. It is clear from equation C that the higher the speed of the mobile the higher the Doppler frequency shift, and the maximum Doppler frequency shift for a certain speed appears when $\alpha$ equals zero or 180 degrees.

$$f_m = \frac{v}{\lambda} \qquad\qquad D$$

Doppler frequency correlation with the speed of the mobile can be used to estimate the speed of the mobile. However, the fundamental problem in a digital cellular system is that, due to the multipath propagation, each channel tap is the sum of many rays. Moreover, due to the memory of the modulated signal, each tap of the equivalent channel at the receiver is a linear combination of more channel taps.

Brief Description of the Drawings

Figures 2 to 15 illustrate various calculated values based on the theory of the invention;
Figure 16 shows the channel equaliser of a base station receiver; and
Figure 17 gives details of the implementation of the invention.

Description of Theory of the Invention

The performance of a proposed algorithm has been be evaluated for the case of a GSM receiver. The channel model assumed both in the analysis and in the simulation is based on the classic assumption of omni-directional antenna and isotropic scattering. The latter assumption is generally appropriate for a base station operating in a microcell environment, where the base station antenna is usually mounted at the same height as surrounding objects.

CHANNEL MODEL

Consider the transmission of a GMSK signal s(t). Denoting by $b_k$ the $k$-th transmitted bit, and by $p(t)$ the impulse response of the transmit filter or pulse shape, the baseband-equivalent transmitted signal may be expressed by the linear model

$$s(t) = \sum_k b_k j^k p(t - kT) \qquad\qquad (1)$$

In the mobile radio environment, the signal (1) is modified by the time-varying propagation channel, in which short-term signal fading, due to multipath propagation, causes frequency selective distortion as explained above. Time variations caused by the Doppler effect may be significant even within the duration of one signal burst.

*A. Multipath Channel*

The received signal is the sum of many Doppler shifted, scaled and delayed versions of the transmitted signal, and can be expressed as

$$y(t) = x(t) + w(t) \tag{2}$$

where

$$x(t) = \int_{-\infty}^{\infty} s(t-\tau)\, c(t,\tau)\, d\tau, \tag{3}$$

$c(t,\tau)$ denotes the time-varying channel impulse response, and $w(t)$ represents additive white Gaussian noise. At a given time $t$ the channel can be regarded as a densely tapped delay line with delay index $\tau$

$$c(t,\tau) = \sum_{n=0}^{N-1} c_n(t)\, \delta(\tau - \tau_n). \tag{4}$$

Under the assumption that the channel can be modelled as clusters of many independent scatterers, for the central limit theorem we can assume Gaussian statistics. Therefore, the channel can be characterised by the mean and correlation of $c(t, \tau)$. When, for a given delay $\tau_n$, the complex gains due to different scatterers have similar amplitudes (*diffuse* scattering), $c(t,\tau)$ has zero mean and its envelope follows a *Rayleigh* distribution. In this case, the tap-gain process $c_n(t)$ are expressed as

$$c_n(t) = \rho_n(t)\, e^{j\varphi_n(t)} = \sum_{k=0}^{K_n-1} \xi_k\, e^{j(2\pi f_{Dk} t + \vartheta_k)}, \tag{5}$$

which represents a cluster of incoherent rays arriving with (approximately) equal delay. In (5), the gain factors $\xi_k$, the Doppler shifts $f_{Dk} = f_D \cos \alpha_k$, and the phase shifts $\theta_k$ may be assumed fixed during very sort time intervals. Differently, in the presence of a dominant path (line-of-sight or *specular* reflection), the cluster can be modelled essentially as a single coherent path

$$c_n(t) = \rho_n\, e^{j(2\pi f_{Dn} t + \vartheta_n)}. \tag{6}$$

In this case $c(t, \tau)$ has a non-zero mean and the envelope has a *Rician* distribution. As a first order statistical description of the fading, we can decompose $c(t,\tau)$ into a specular and a diffuse component. The *specular component,* corresponding to the dominant path, is defined by $c_s(t,\tau) = E\{c(t,\tau)\}$ and is known as the *channel mean.* The *diffuse component* is given by $c_d(t,\tau) = c(t,\tau) - E\{c(t, \tau)\}$ and is Rayleigh distributed.

Under the assumption of Gaussianity, a sufficient second order statistical description of the process $c(t,\tau)$ is given by the *tap gain cross-correlation function* $R_{cc}(t_1,\tau_1,t_2,\tau_2) = E\{c(t_1,\tau_1)\, c^*(t_2,\tau_2)\}$. In the case of *wide sense stationary uncorrelated scatters* (WSSUS) we have

$$R_{cc}(t_1,\tau_1,t_2,\tau_2) = R_{cc}(t_1 - t_2, \tau_1)\, \delta\,(\tau_1 - \tau_2) = R_{cc}(t, \tau_1)\delta\,(\tau_1 - \tau_2). \tag{7}$$

It is often possible to write the tap gain correlation function in product form

$$R_{cc}(t,\tau) = R_c(t) \cdot \Phi_c(\tau) \tag{8}$$

where $\Phi_c(\tau)$ is the *delay power density profile* and $R_c(t)$ is the *normalised autocorrelation function*, $R_c(0) = 1$. The Fourier transform $S_c(f)$ of $R_c(t)$ is the *Doppler spectrum* of the channel fading process. Under the assumption of isotropic scattering $R_c(t)$ is commonly modelled as

$$R_c(t) = J_o(2\pi f_D t) \tag{9}$$

where $J_o(x)$ is the zero-order Bessel function. The resulting fading power spectrum is

$$S_c(f) = \begin{cases} 1/\sqrt{1-(f/f_D)^2} & |f| < f_D \\ 0 & |f| \geq f_D \end{cases}. \tag{10}$$

*B. The GSM Channel Model*

GSM specifies the propagation models related to different propagation environments, to assess the error performance of the receiver. For each propagation condition, the GSM wideband multipath channel is described by the time-varying impulse response, with a defined set of tap gains $c_n(t) = \rho_n(t)\, e^{j\varphi n(t)}$ of a given mean power and delay $\tau_n$. The real and imaginary part of the complex taps $c_n(t)$ are modelled as narrowband stationary independent coloured Gaussian noise processes, with variance $C_n^2 / 2$. In the presence of a line-of-sight component $\mathrm{Re}[c_n(t)]$ and $\mathrm{Im}[c_n(t)]$ have a Rician-type Doppler spectrum, and the envelope $\rho_n(t)$ is Rician distributed. In the absence of a dominant path, $\mathrm{Re}[c_n(t)]$ and $\mathrm{Im}[c_n(t)]$ are zero mean processes with the classical Doppler spectrum, and the envelope follows the Rayleigh distribution. In the GSM channels, the Rician Doppler spectrum is specified only for the first tap of the model and rural area conditions (RA). In all the other cases, including the model for typical urban area conditions (TU), the stochastic process $c_n(t)$ are characterised by the classical Doppler spectrum.
Using the definition of $R_{cc}$ one has

$$R_{cc}(t_1,\tau_1,t_2,\tau_2) = \sum_{i=0}^{N-1} \sum_{j=0}^{N-1} E\{ c_i(t_1)\, c_j^*(t_2)\} \delta(\tau_1 - \tau_i)\, \delta(\tau_2 - \tau_j).$$

Now, from the independence of the tap gain processes and under the assumption of Rayleigh distribution ($E\{c_n(t)\} = 0$)

$$E\{ c_i(t_1)\, c_j^*(t_2)\} = \begin{cases} E\{ c_i(t_1)\, c_i^*(t_2)\} & i = j \\ E\{c_i(t_1)\} \cdot E\{c_j^*(t_2)\} = 0 & i \neq j \end{cases} \tag{11}$$

and therefore

$$R_{\alpha}(t_1, t_2, \tau) = \sum_{n=0}^{N-1} E\{c_n(t_1)c_n^*(t_2)\}\delta(\tau - \tau_n) =$$

$$= R_{\alpha}(t_1 - t_2, \tau) = R_c(t_1 - t_2) \cdot \Phi_c(\tau) \qquad (12)$$

where, according to (9),

$$R_c(t_1 - t_2) = J_o(2\pi f_D(t_1 - t_2)) \qquad (13)$$

and

$$\Phi_c(\tau) = \sum_{n=0}^{N-1} C_n^2 \delta(\tau - \tau_n). \qquad (14)$$

*C. Model of the Receiver Front End*

Taking into account (3), (4) and (1), the received signal (2) can be expressed as

$$y(t) = \sum_{n=0}^{N-1} c_n(t)s(t - \tau_n) + w(t) = \sum_i b_i j^i g(t, \tau = t - iT) + w(t) \qquad (15)$$

where

$$g(t, \tau) = c(t, \tau) \otimes p(\tau) = \sum_{n=0}^{N-1} c_n(t)p(\tau - \tau_n) \qquad (16)$$

represents the time-variant equivalent channel impulse response at the receiver antenna. Apart from the random phase shift introduced by the channel itself, imperfection and instability of the transmitter and receiver oscillators may give rise to a carrier frequency offset $v$. Denoting by $f(t)$ the equivalent impulse response of the receive filter, ie the result of all the filtering stages in the receiver front-end, the received signal after down conversion to baseband can be then expressed as

$$r(t) = e^{j(2\pi v t + \theta)} y(t) \otimes f(t) = e^{j2\pi v t} \sum_i b_i j^i q(t, \tau = t - iT) + n(t) , \qquad (17)$$

where $\theta$ is a constant phase offset,

$$q(t, \tau) = e^{j\theta} \cdot g(t, \tau) \otimes f(\tau) = \qquad (18)$$

$$n(t) = e^{j(2\pi vt + \theta)} \cdot w(t) \otimes f(t) = \tag{19}$$

and $e^{j2\pi vt}ji$ $q(t,\tau)$ is the equivalent impulse response at the output of the receiver front-end.

CHANNEL ESTIMATION

*A. Channel Estimation and Tracking for a GSM receiver*

If the frequency response of the receiver fitter $f(t)$ is approximately flat within the bandwidth of $x(t)$, $F(f) = F[f(t)] \approx 1$ for $|f| \leq |B/2 + v|$, from (17)-(19) we can write

$$r(t) \approx e^{j2\pi vt} \sum_i b_i \, j^i \, \tilde{g}(t, t - iT) + n(t) \tag{20}$$

where

$$\tilde{g}(t, \tau) = \sum_{n=0}^{N-1} \tilde{c}_n(t) \, p(\tau - \tau_n), \qquad \tilde{c}_n(t) = c_n(t) \, e^{j\theta}. \tag{21}$$

In a GSM receiver, channel estimation and equalisation are conventionally performed on a derotated and sampled version of the signal $r(t)$. Assuming Baud-rate sampling, and defining $r(k) = j^{-k} r(kT)$, $n(k) = j^{-k} n(kT)$, one has

$$r(k) = e^{j2\pi v kT} \sum_i b_i \, j^{-(k-i)} \, \tilde{g}(kT, kT - iT) + n(k).$$

Letting

$$H(k, \ell) = j^{-\ell} \, \tilde{g}(t = kT, \tau = \ell T) \tag{22}$$

we obtain

$$r(k) = e^{j2\pi v kT} \sum_i b_i \, H(k, k-i) + n(k). \tag{23}$$

The channel impulse response is usually estimated by means of correlative channel sounding, which employs the training sequence midamble of the GSM burst. If $b_n$, $n = 0, ..., N_o - 1$ indicate the known training bits, the estimate of the $\ell$-th channel tap $h(k, \ell)$ is given by

$$\hat{H}(\ell) = \frac{1}{N_0} \sum_{n=0}^{N_0-1} b_n \cdot r(\ell+n) \approx e^{j2\pi v n_0 T} H(n_0,\ell) + \gamma(\ell) \qquad (24)$$

where $n_o = \ell + (N_o-1)/2$, and

$$\gamma(\ell) = \frac{1}{N_0} \sum_{n=0}^{N_0-1} b_n \cdot n(\ell+n). \qquad (25)$$

Once the channel response is estimated by training at the burst midamble, the variation of the channel taps within the burst is usually tracked by means of decision-directed algorithms, where tentative decisions at the equalizer output are fed back to update the initial channel estimate. As a result of the tracking procedure, the time variations of the channel are represented by the estimated equivalent response

$$\hat{h}(k,\ell) \approx e^{j2\pi v k T} h(k,\ell) + \gamma(k,\ell). \qquad (26)$$

ESTIMATION OF THE DOPPLER SHIFT

*A. Effect of the Doppler Shift on the Phase Variation of the Channel Taps*

Assume the knowledge of the overall channel impulse response at the time instants $t_o = k_o T$ and $t_1 = k_1 T$. Denoting by $h(k_o,\ell)$ and $h(k_1,\ell)$ the corresponding two values of the $\ell$-th channel tape, we consider the quantity

$$\Gamma(k_o,k_1,\ell) = H(k_1,\ell)H^*(k_o,\ell). \qquad (27)$$

The phase of (27) is the phase variation of $h(k, )$ in the time $t_1$-$t_o$. Using (22) and (21)

$$\Gamma(k_o,k_1,\ell) = j^{-\ell} \tilde{g}(k_1,\ell) \, j^{\ell} \tilde{g}^*(k_o,\ell) = g(k_1,\ell) g^*(k_o,\ell), \qquad (28)$$

with $g(k,\ell) = g(t = kT, \tau = \ell T)$. Then substituting (16) into (28)

$$\Gamma(k_o,k_1,\ell) = \sum_{i=0}^{N-1} \sum_{j=0}^{N-1} c_i(k_1 T) c_j^*(k_o T) p(\ell T - \tau_i) p^*(\ell T - \tau_j). \qquad (29)$$

In the particular case where one can approximately assume the presence of one dominant line-of-sight component $c_n(t)$ with delay $\tau_n$, from (6) we may write

$$\Gamma(k_0,k_1,\ell) \approx \rho_n^2 \, e^{j\{\varphi_n(k_1 T) - \varphi_n(k_0 T)\}} |p(\ell T - \tau_n)|^2$$

$$\arg\{\Gamma(k_0,k_1,\ell)\} \approx 2\pi f_{Dn}(k_1 - k_0) T.$$

However, when the tap-gains $c_n(t)$ represent diffuse scatting (see (5)), the relationship between the phase of the RHS of (29) and the Doppler frequency is difficult to analyse. In order to identify a suitable measure of the Doppler, we observe that, taking into account (11),

$$E\{g(k_1,\ell)\,g^*(k_0,\ell)\} = \sum_{n=0}^{N-1} E\{c_n(k_1T)\,c_n^*(k_0T)\}\,|p(\ell T - \tau_n)|^2 =$$

$$= R_c(k_1T - k_0T)\sum_{n=0}^{N-1} C_n^2\,|p(\ell T - \tau_n)|^2 = R_c(k_1T - k_0T)\cdot\Theta_c(\ell T), \qquad (30)$$

where

$$R_c(t_1 - t_0) = J_0(2\pi\,f_D(t_1 - t_0)) \qquad\qquad (31)$$

$$\Theta_c(\tau) = \Phi_c(\tau)\otimes|p(\tau)|^2 = \sum_{n=0}^{N-1} C_n^2\,|p(\tau - \tau_n)|^2. \qquad (32)$$

Therefore, we conclude that with the classical Doppler spectrum

$$\arg\{\,E\{\Gamma(k_0,k_1,\ell)\}\,\} = \arg\{\,E\{g(k_1,\ell)\,g^*(k_0,\ell)\}\,\} = 0\,. \qquad (33)$$

It is worth noting that the validity of (33) depends on the symmetry of the Doppler spectrum, and not on its particular shape.

The above discussion suggests that an estimate of the Doppler should be based on a measure of the statistics of the *phase variations* of (27), that is, of the *frequency variations* of the $\ell$-th channel tap. We define the Doppler estimator

$$2\pi\hat{\psi}_D(k_1 - k_0)T = (E\{(\arg\{Q(\Gamma)\})^2\})^{1/2}, \qquad (34)$$

where $Q(\Gamma)$ indicates a generic function of $\Gamma(k_0,k_1,\ell),\ell = 0, ..., L\text{-}1$. A simple way to decrease the influence of the taps with lower amplitudes is to choose $Q(\Gamma)$ as the sum of the quantities $\Gamma(k_0,k_1,\ell)$ for all channel taps. This gives

$$2\pi\hat{\psi}_D(k_1 - k_0)T = \left(E\left\{\left(\arg\left\{\sum_{\ell=0}^{L-1}\Gamma(k_0,k_1,\ell)\right\}\right)^2\right\}\right)^{1/2} =$$

$$= \left(E\left\{\left(\arg\left\{\sum_{\ell=0}^{L-1}g(k_1,\ell)\,g^*(k_0,\ell)\right\}\right)^2\right\}\right)^{1/2}. \qquad (35)$$

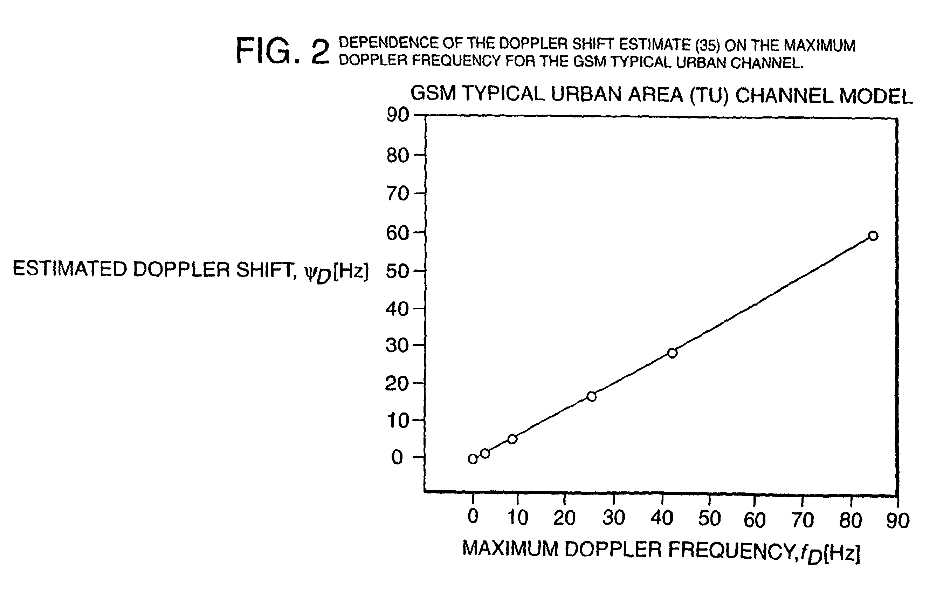

The relationship between $\hat{\psi}_D$ in (35) and the maximum Doppler frequency $f_D$ is illustrated in Figure 2 for the GSM type urban (TU) channel model. The data have been collected from the results of several simulation runs.

The consistency of the Doppler estimates (35) for different multipath delay profiles may be improved by taking the function $Q(\Gamma) = \Gamma(k_0,k_1,\bar{\ell})$ with $\bar{\ell} = \text{argmax}\,\{|g(k,\ell)|\}$.

The corresponding estimator results

$$2\pi\hat{\psi}_D(k_1 - k_0)T = \left( \, E\{ \, (\arg\{ \, \Gamma(k_0,k_1,\bar{\ell}) \, \} \, )^2 \} \, \right)^{1/2} \; =$$

$$= \left( \, E\{ \, (\arg\{ \, g(k_1,\bar{\ell}) \cdot g^*(k_0,\bar{\ell}) \, \} \, )^2 \} \, \right)^{1/2}. \qquad (36)$$

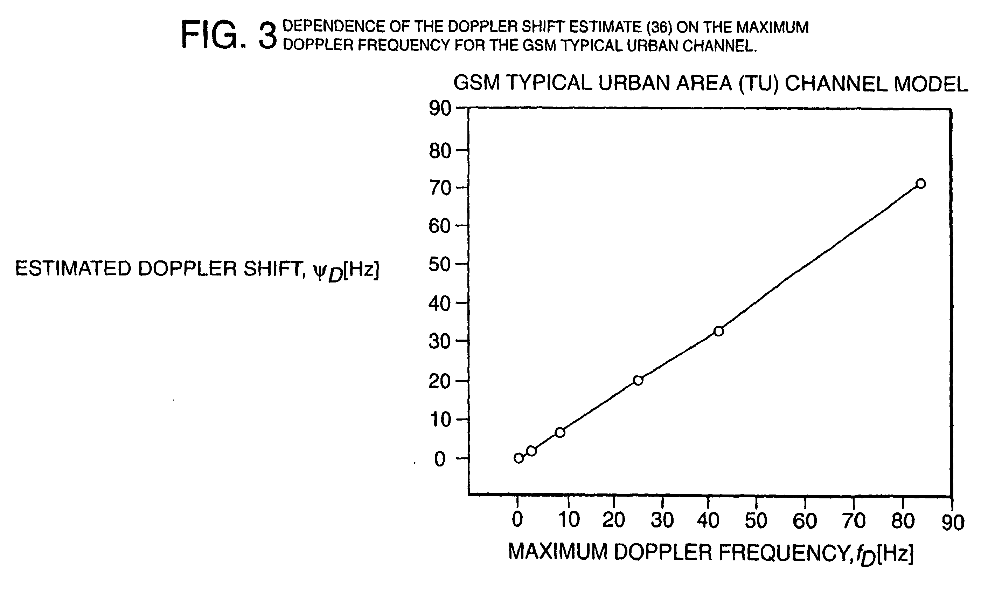

The dependence of the estimated Doppler shift $\hat{\psi}_D$ on the maximum Doppler frequency $f_D$ for the TU channel is shown in Figure 3.

*B. Measure of the Doppler shift using the Estimated Channel Response*

A practical Doppler estimator based on the rule (35) should make use of the estimated channel impulse response. Approximating the statistical expectation with a time average by sliding window, the estimator (35) becomes

$$2\pi\hat{\psi}_D(k_1 - k_0)T \approx \left( \, \frac{1}{M}\sum_{m=0}^{M-1} \, (\arg\{\sum_{\ell=0}^{L-1} \Gamma_m(k_0,k_1,\ell)\} \, )^2 \, \right)^{1/2} =$$

$$= \left( \, \frac{1}{M}\sum_{m=0}^{M-1} (\arg\{\sum_{\ell=0}^{L-1} \hat{h}_m(k_1,\ell) \cdot \hat{h}_m^*(k_0,\ell)\} \, )^2 \, \right)^{1/2}, \qquad (37)$$

where $\hat{h}_m(k_0,\ell)$ and $\hat{h}_m(k_1,\ell)$ are the estimated channel responses at the edges of the $m$-th burst, and the quantity

$$\left( \arg\{\sum_{\ell=0}^{L-1}\Gamma_m(k_0,k_1,\ell)\} \, \right)^2$$

is averaged over $M$ bursts. Now, from (26)-(28), in the presence of a carrier frequency error we have

$$\hat{H}(k_1,\ell) \cdot \hat{h}^*(k_0,\ell) \approx e^{j2\pi v(k_1-k_0)T} g(k_1,\ell) \, g^*(k_0,\ell) + \zeta(k_0,k_1,\ell) \, , \qquad (38)$$

with

$$\zeta(k_0,k_1,\ell) = e^{j2\pi v k_1 T} H(k_1,\ell)\gamma^*(k_0,\ell) + e^{-j2\pi v k_0 T} H^*(k_0,\ell)\gamma(k_1,\ell) + \gamma(k_1,\ell)\gamma^*(k_0,\ell).$$

In the case of high signal-to-noise ratio, neglecting the noise term $\zeta(k_0,k_1,\ell)$, (38) gives

$$\arg\{\sum_{\ell=0}^{L-1} \hat{H}(k_1,\ell) \cdot \hat{h}^*(k_0,\ell)\} \approx 2\pi v(k_1 - k_0)T + \arg\{\sum_{\ell=0}^{L-1} g(k_1,\ell) \cdot g^*(k_0,\ell)\} \, . \qquad (39)$$

Therefore the Doppler estimate (37) is biased by the presence of a carrier frequency offset $v$. To overcome this problem, we would need an estimate of the carrier offset. In fact, if such as estimate $\hat{v}_m$ is available for the $m$-th burst, the Doppler estimator can be modified to

$$2\pi\hat{\psi}_D(k_1-k_0)T \approx (\ \frac{1}{M}\sum_{m=0}^{M-1}(\ \arg\{\sum_{\ell=0}^{L-1}\Gamma_m(k_0,k_1,\ell)\}-2\pi\hat{v}_m(k_1-k_0)T\ )^2\ )^{1/2} =$$

$$= (\ \frac{1}{M}\sum_{m=0}^{M-1}(\ \arg\{\sum_{\ell=0}^{L-1}\hat{h}_m(k_1,\ell)\cdot\hat{h}_m^*(k_0,\ell)\}-2\pi\hat{v}_m(k_1-k_0)T\ )^2\ )^{1/2} \approx$$

$$\approx (\ \frac{1}{M}\sum_{m=0}^{M-1}(\ \arg\{\sum_{\ell=0}^{L-1}g_m(k_1,\ell)\cdot g_m^*(k_0,\ell)\}\ )^2\ )^{1/2}, \qquad (40)$$

which is equivalent to (35), provided that the carrier offset estimate is not biased by the presence of a Doppler shift. A technique to derive an estimate of the carrier frequency offset to be used in the above Doppler estimator is illustrated in the next subsection.

The above discussion applies to the estimator (35). It is straightforward to derive the corresponding result for equation (36)

$$2\pi\hat{\psi}_D(k_1-k_0)T \approx (\ \frac{1}{M}\sum_{m=0}^{M-1}(\ \arg\{\Gamma_m(k_0,k_1,\bar{\ell})\}-2\pi\hat{v}_m(k_1-k_0)T\ )^2\ )^{1/2}. \quad (41)$$

*C. Estimation of the Carrier Frequency Offset*

Assuming $E\{\zeta(k_0,k_1,\ell)\} \approx 0$, from (38) follows that

$$E\{\hat{h}(k_1,\ell)\cdot\hat{h}^*(k_0,\ell)\} \approx e^{j2\pi v(k_1-k_0)T}E\{g(k_1,\ell)g^*(k_0,\ell)\}.$$

Therefore, recalling that from (33) in the case of Rayleigh fading with symmetric Doppler spectrum

$$\arg\{\ \sum_{\ell=0}^{L-1}E\{g(k_1,\ell)g^*(k_0,\ell)\}\ \} = 0, \qquad (42)$$

we have the carrier frequency offset estimator

$$2\pi\hat{v}(k_1 - k_0)T = \arg\{ \ B\sum_{\ell=0}^{L-1}\Gamma_m(k_0,k_1,\ell)\} \ \} \approx$$

$$= \arg\{ \ B\sum_{\ell=0}^{L-1}\hat{h}(k_1,\ell)\cdot\hat{h}^*(k_0,\ell)\} \ \} \approx$$

$$\approx \arg\{ \ e^{j2\pi v(k_1-k_0)T}\sum_{\ell=0}^{L-1} B\ g(k_1,\ell)\ g^*(k_0,\ell) \ \} =$$

$$= 2\pi v(k_1 - k_0)T + \arg\{ \ \sum_{\ell=0}^{L-1} B\ g(k_1,\ell)\ g^*(k_0,\ell) \ \}, \qquad (43)$$

and, provided that (42) holds, we obtain an estimate of the frequency offset that is independent of the Doppler shift

$$2\pi\hat{v}(k_1 - k_0)T = \arg\{ \ B\sum_{\ell=0}^{L-1}\hat{h}(k_1,\ell)\cdot\hat{h}^*(k_0,\ell)\} \ \} \approx 2\pi v(k_1 - k_0)T. \qquad (44)$$

A practical estimator is again obtained by substituting the ensembled averages with time averages. according to

$$2\pi\hat{v}(k_1 - k_0)T \approx \arg\{ \ \frac{1}{M}\sum_{m=0}^{M-1}\sum_{\ell=0}^{L-1}\Gamma_m(k_0,k_1,\ell) \ \} =$$

$$= \arg\{ \ \frac{1}{M}\sum_{m=0}^{M-1}\sum_{\ell=0}^{L-1}\hat{h}_m(k_1,\ell)\cdot\hat{h}_m^*(k_0,\ell) \ \}, \qquad (45)$$

where $\hat{h}_m(k_0,\ell)$ and $\hat{h}_m(k_1,\ell)$ are estimated channel responses at the beginning and at the end of the $m$-th burst, and the quantity

$$\sum_{\ell=0}^{L-1}\Gamma_m(k_0,k_1,\ell)$$

is averaged over $M$ bursts.

An algorithm of the kind of (45) is usually implemented in the digital receiver of a GSM base station to correct the frequency offset due to the transmitter and receiver oscillators. We observer that the quality of the estimation mainly depends on the effectiveness of the operation of noise suppression by time average, and on the tracking performance of the decision-directed algorithm that provides the channel estimate at the edges of the burst.

SIMULATION RESULTS

The performance of the estimators discussed above in the section ESTIMATION OF THE DOPPLER SHIFT have been assessed by computer simulations for the GSM transmission channel. The simulator includes GMSK modulator, time-varying mulipath channel, additive white Gaussian noise, and receiver front-end. The equivalent noise power spectral density at the antenna connector has been set to -116 dBm. At the receiver, after the equivalent baseband model of the RF and IF filters and after demodulation affected by a frequency error $v$, the signal is quantized and fed to a trellis equalizer. For each burst, an estimate of the channel is first computed by means of the GSM training sequence midamble. The estimated channel is then used to produce estimates of the transmitted bits, which in turn are fed back to track the variations of the channel impulse response. The following results have been obtained employing an LMS tracking algorithm.

*A. Carrier Offset Estimator*

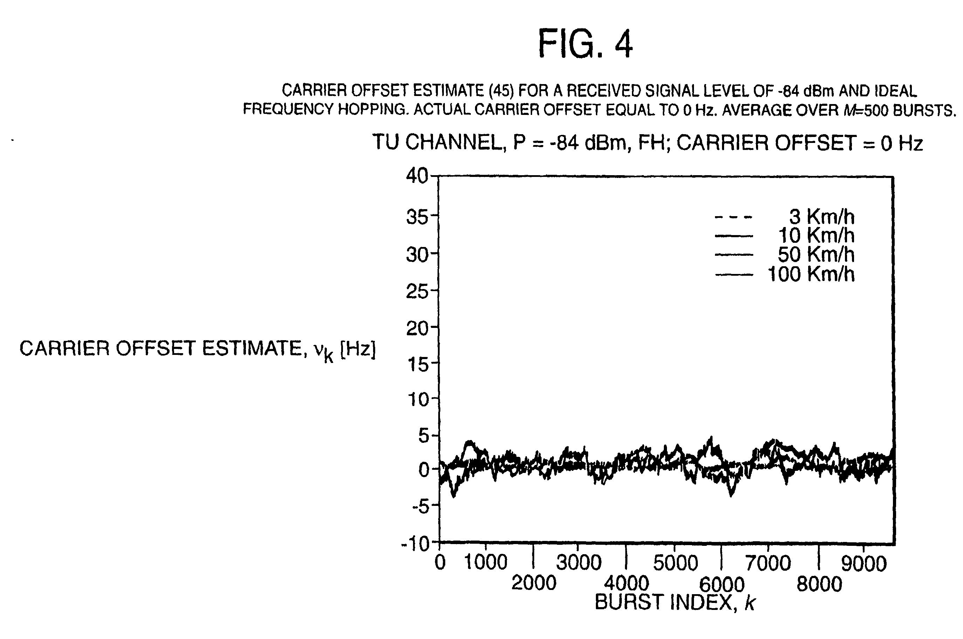

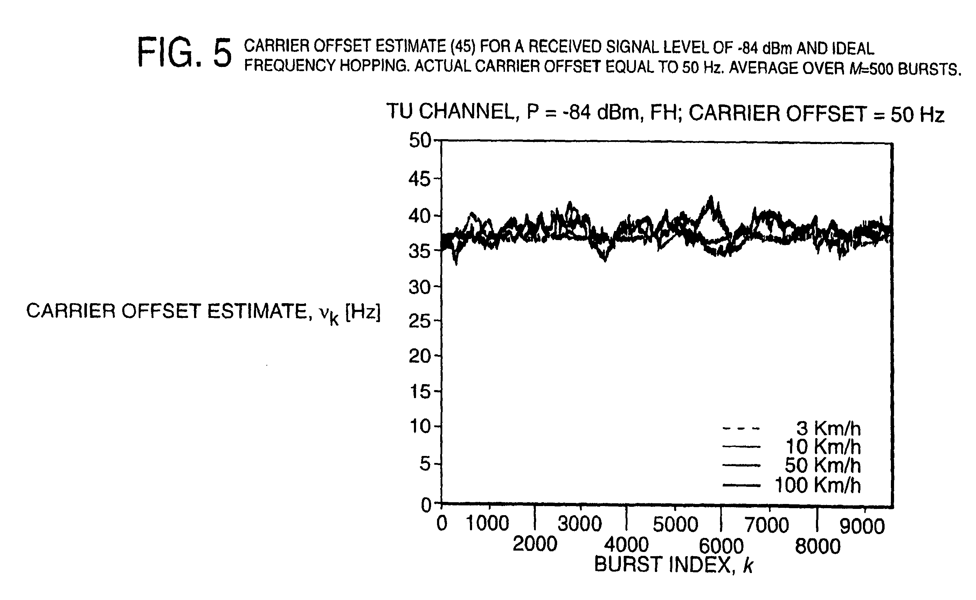

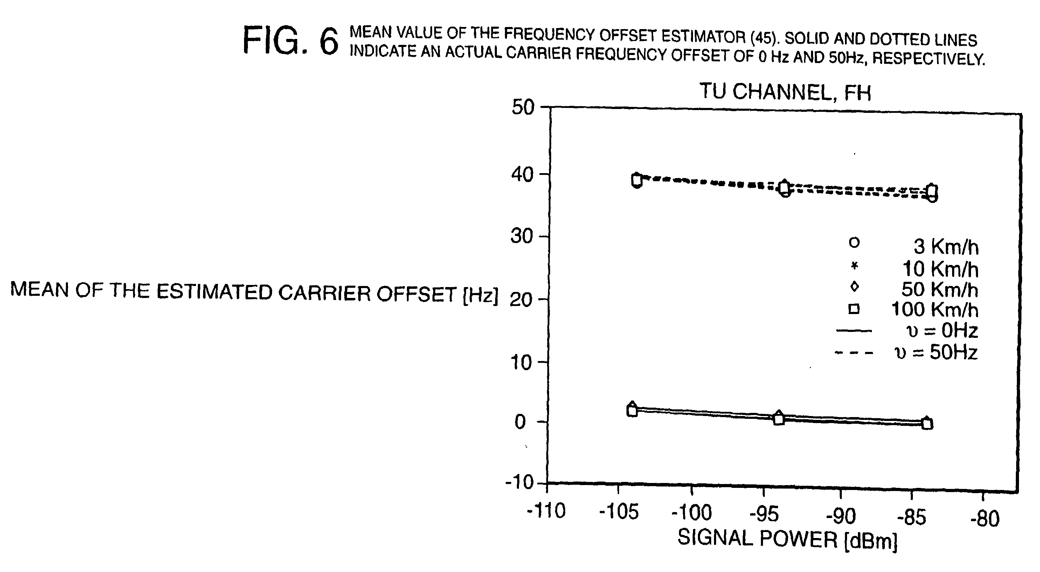

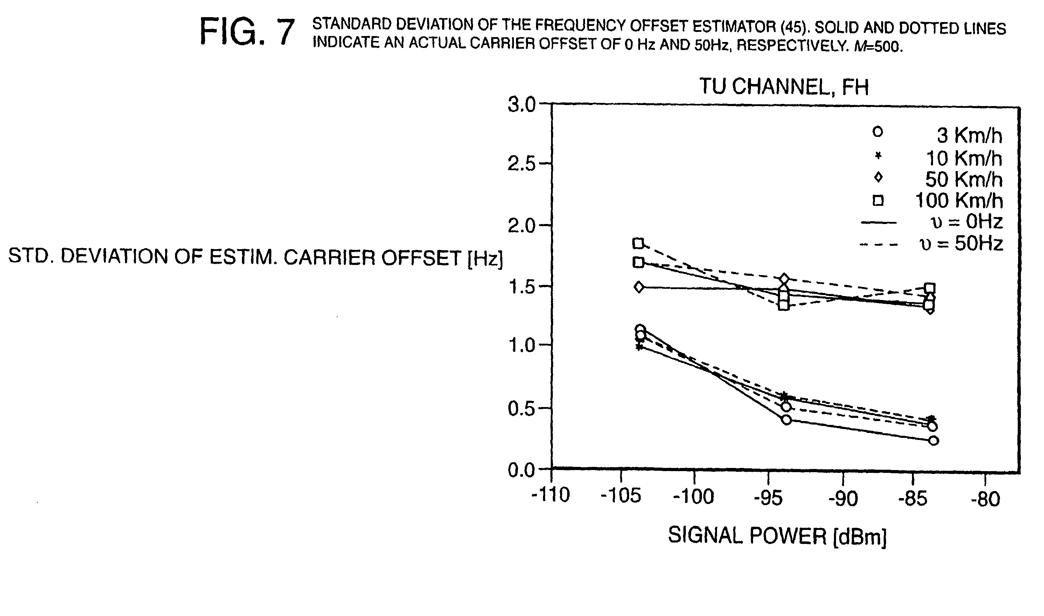

In agreement with the analysis presented above, the simulation results for the GSM TU channel model show that the carrier offset estimator (45) is substantially independent of the Doppler shift. Figures 4 and 5 illustrate the performance with ideal frequency hopping, for a received signal level of-84 dBm. Similar results are obtained without frequency hopping. The behaviour of the estimator is summarised in Figure 6 and 7.

*B. Doppler Shift Estimator*

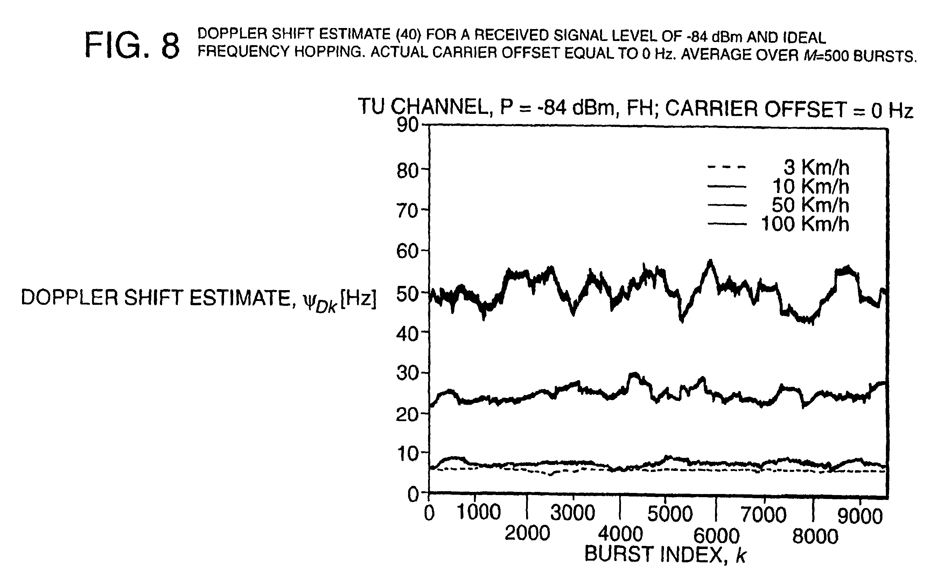

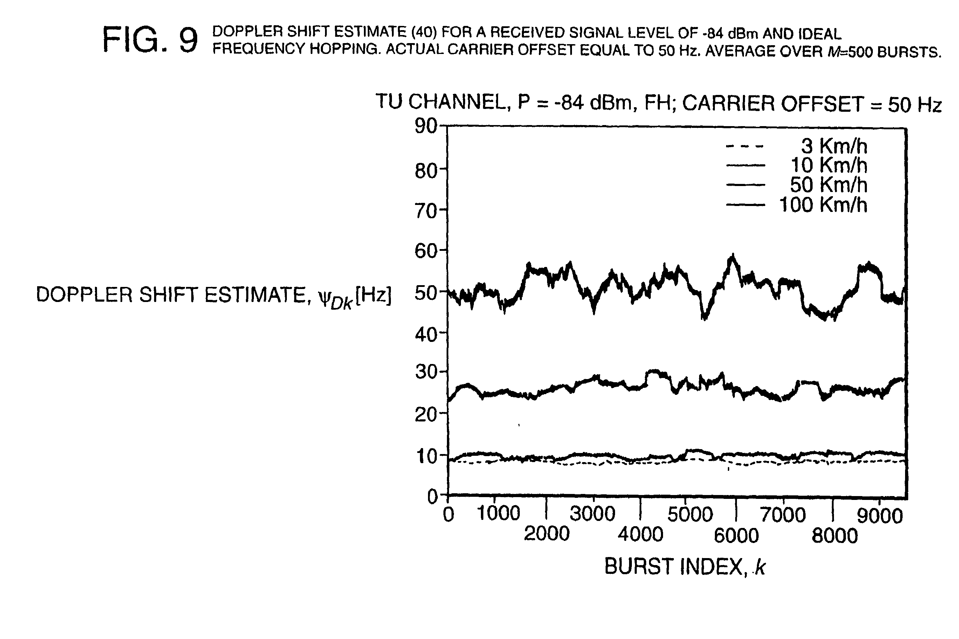

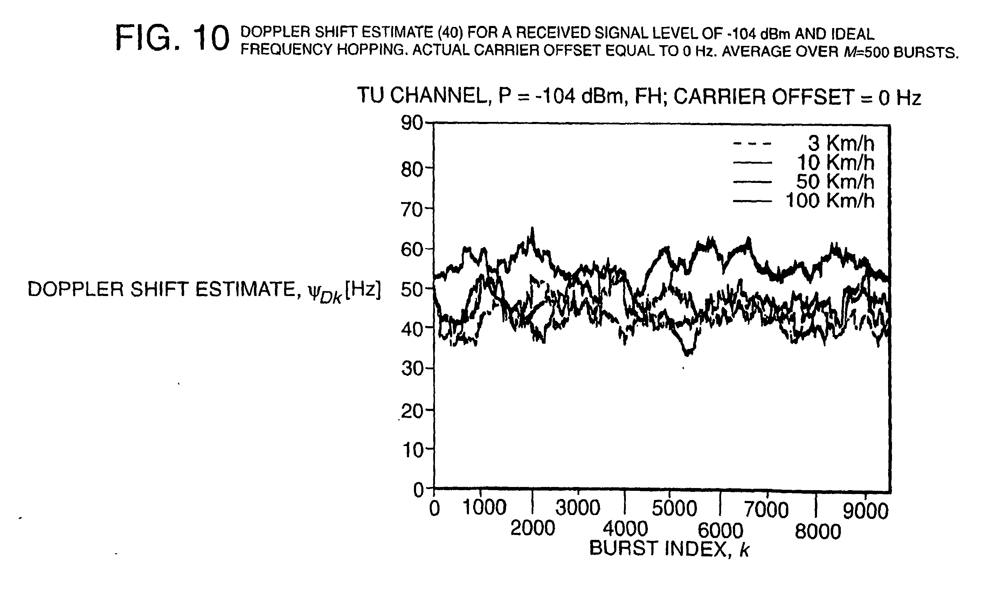

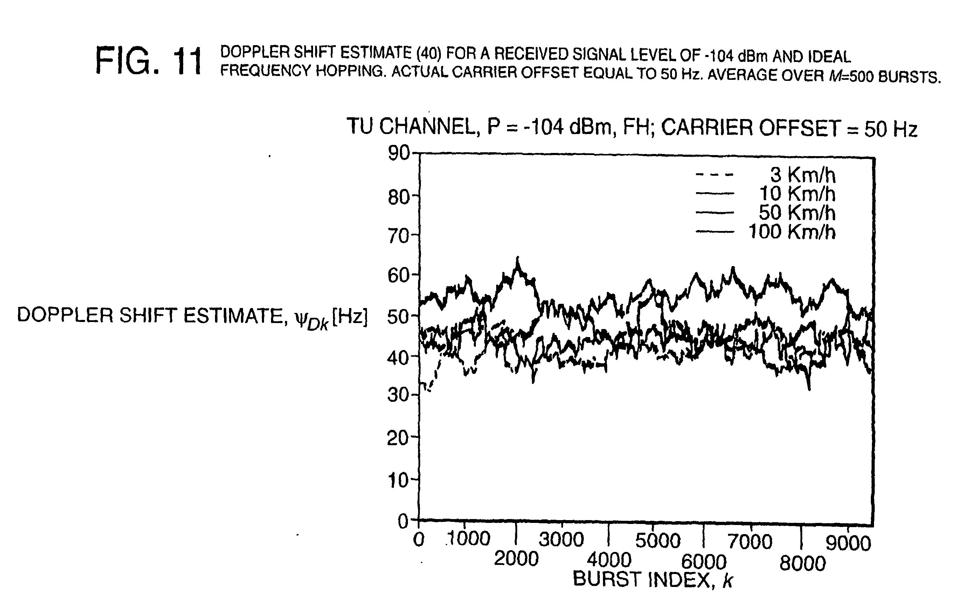

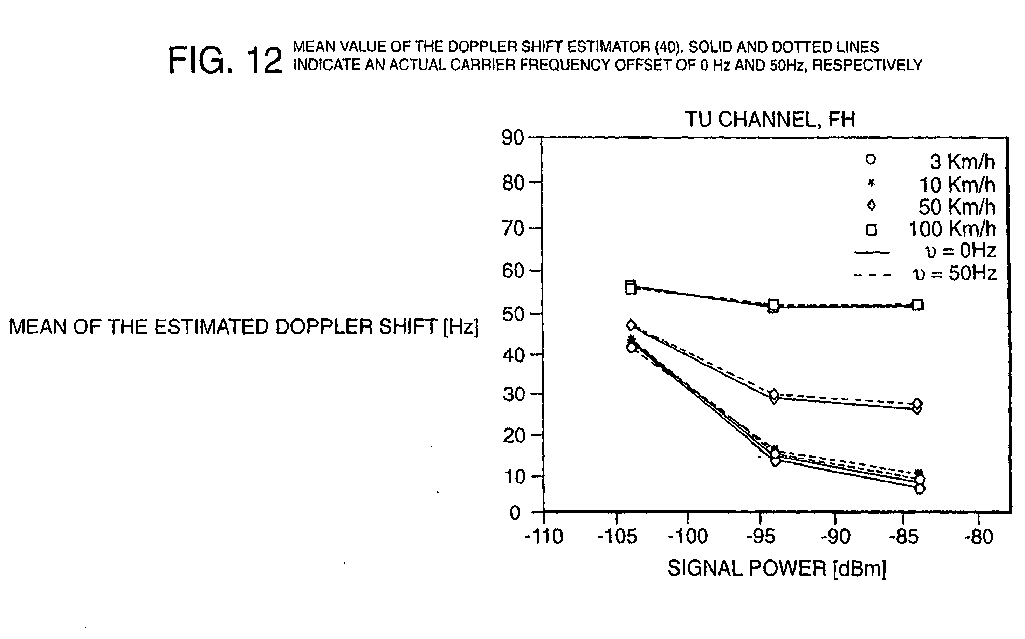

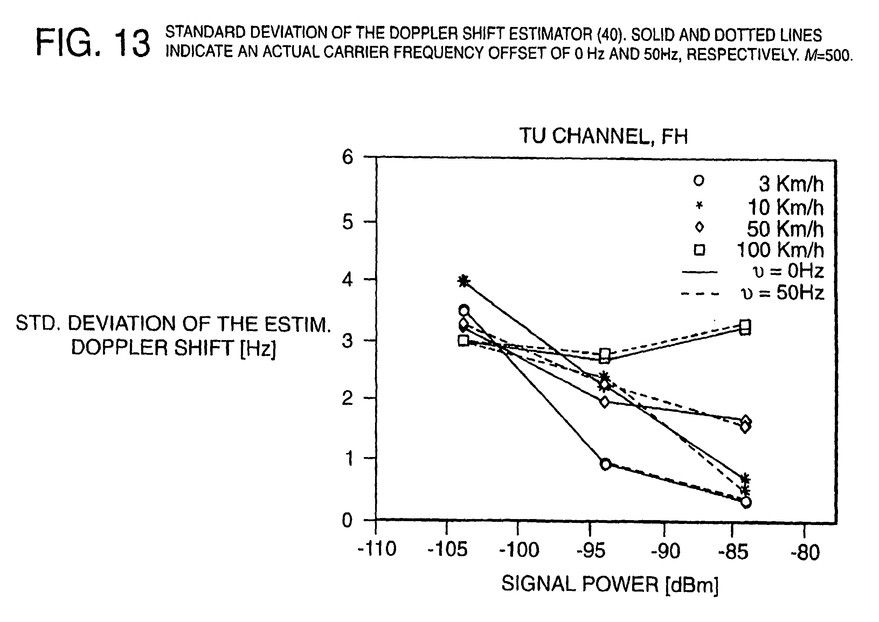

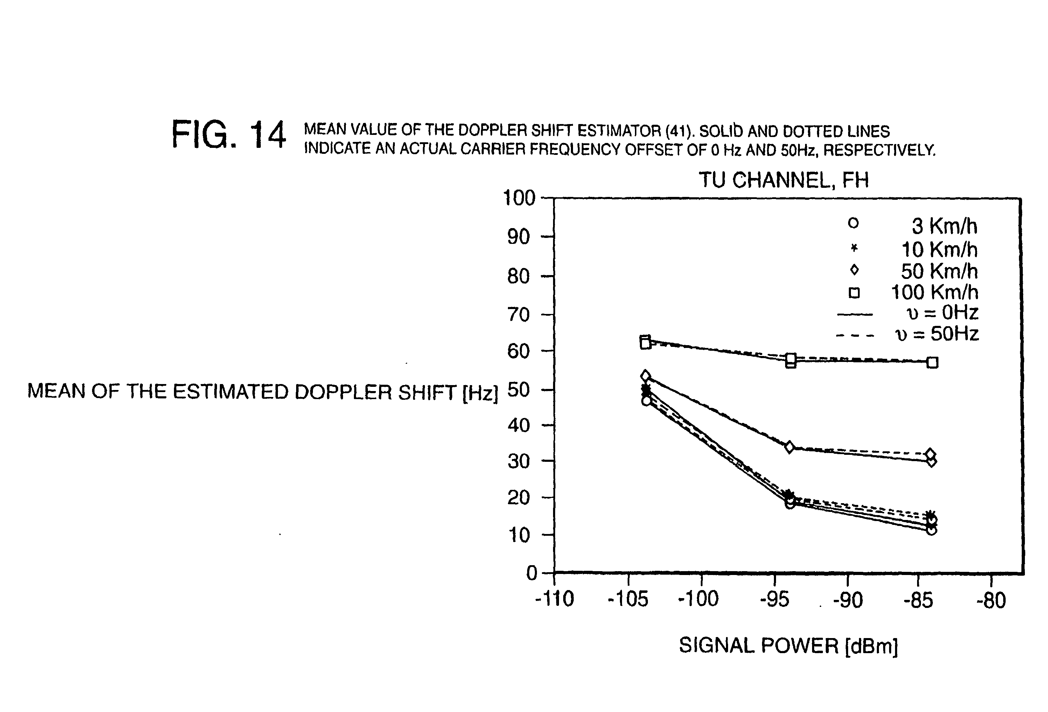

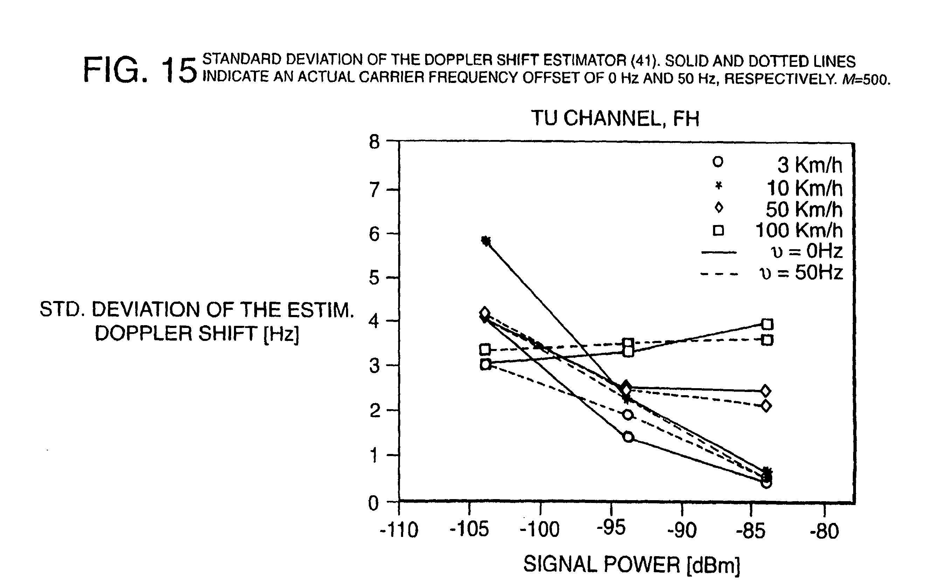

The performance of the Doppler estimator (40) has been assessed for the case of the GSM TU channel. In the simulation, the estimation of the carrier offset has been obtained from (45). As shown in Figures 8 to 11, the Doppler estimator is not biased by the presence of a carrier frequency offset. From Figures 10 and 11, one can derive that, in the case of frequency hopping, the estimated Doppler may allow to separate low mobility (3 Km/h) and high mobility (100 Km/h) users at a received signal level of-104 dBm. The results collected from the simulation of 10,000 bursts at different signal-to-noise are summarised in Figures 12 and 13.
Similar results are obtained with the Doppler estimator (41). The performance with TU channel and frequency hopping are shown in Figures 14 and 15.

Description of a Preferred Embodiment

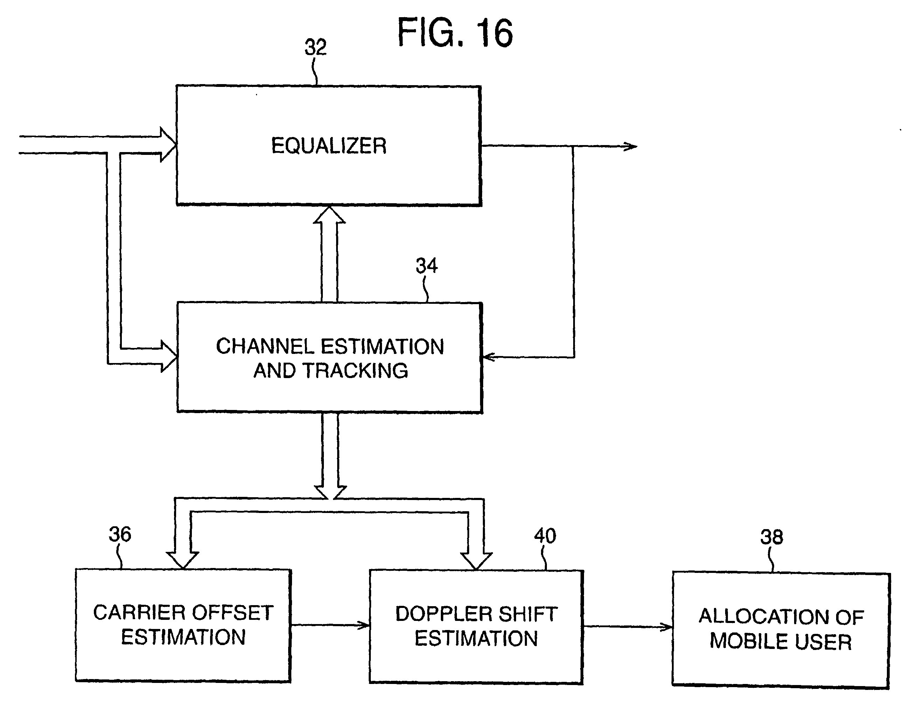

Figure 16 shows a part of a base station having an equalizer 32 and a channel estimator and tracker 34, a carrier offset estimator 36, and a mobile user allocator 38 as is conventional. The equalizer 32 and channel estimator 34 both receive incoming signals, and the estimator is connected to provide a channel estimation signal both to the equalizer and to the carrier offset estimator.
There is also a Doppler shift estimator 40 connected to receive signals from the channel estimator 34 and also from the carrier offset estimator 36. The output of the Doppler shift estimator is connected to the allocator 38.

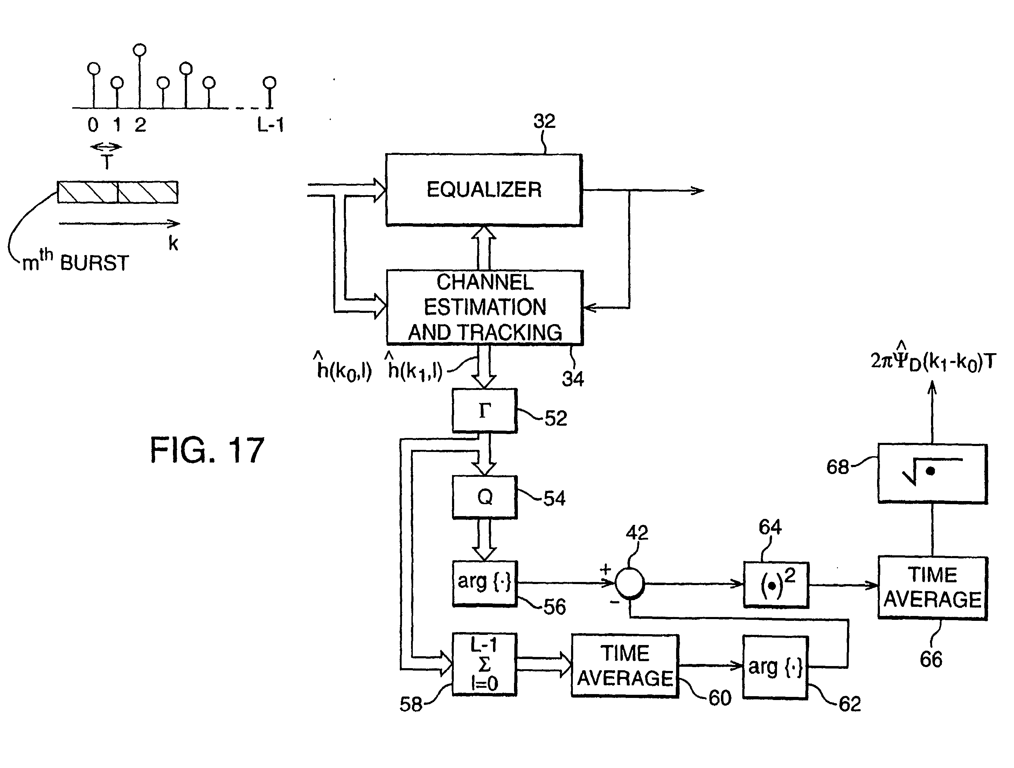

Figure 17 indicates the basic steps of signal processing, considering one burst and/or time slot. The m-th burst is indicated, and the direction of increasing k where k is the bit number. The burst is received through a channel, which equivalent discrete-time model has L-1 channel taps, the taps being spaced by a time T. The real and imaginary parts of each tap evolve in time independently of each other and of the other taps. Within a burst, by calculations from the central bit $k_0$ outwards to either end of the burst, bit $k_1$, the speed of the mobile can be estimated. The objective, as explained above, is that the phase variations, derived from the frequency variations of -th channel tap are to be measured.
The first step is that the estimator 34 estimates the -th tap of the channel impulse response for the time indexes $k_0$, $k_1$, namely $h(k_0,\ell)$ and $h(k_1,\ell)$. The quantity $\Gamma(k_0, k_1,\ell)$ is then computed in step 52, (equation 27).
The function $Q(\Gamma(k_0,k_1,\ell)$ is calculated in step 54 (equation 34), and its argument derived in step 56 providing the first signal.
Simultaneously, the carrier frequency offset estimate is derived in blocks 58, 60 and 62. In step 58 the sum of the quantities $\Gamma(k_0,k_1,\ell)$ is computed, for $\ell = 0, ..., L -1$; its time average is performed in step 60, and the argument of the resulting signal 9 is taken in step 62, (equation 45) providing the second signal. The estimated carrier offset at the output of block 62 is subtracted in a subtract junction 42 and the squared value of the difference (64) is time averaged (66) and fed to a square root device 68 providing the estimated (RMS) Doppler shift. The estimated speed of the mobile can then be derived from the estimated Doppler shift, and this information can be used in allocating the mobile user to a microcell or a macrocell as appropriate.
It will be appreciated that while it is known how to determine an estimate of the carrier frequency offset in a mobile system, it is not previously been exploited, the fact that under the assumption of symmetric Doppler spectrum, the offset is independent of Doppler shift. The present invention depends on this realisation.
Several further modifications of the invention will be readily apparent to those skilled in the art, in the light of the foregoing disclosure. The scope of the present invention should be interpreted from the following claims, as such claims are read in the light of the disclosure.

**Claims**

1. A method of determining the speed of a mobile user in a mobile telecommunications system comprises the steps of:

   (a) deriving a first signal related to a phase variation, in a time interval which is a burst or fraction of a burst, of one or more taps of an equivalent channel impulse response at the input of a channel equalizer in a base station receiver which receives the signal,
   (b) deriving a second signal related to the carrier frequency offset of the signal received in the base station receiver,
   (c) subtracting the second signal from the first signal, and
   (d) from the difference, deriving a third signal related to the Doppler frequency shift.

2. A method according to Claim 1, in which the first signal is derived for each time interval by computing for each channel tap a quantity, the phase of which is the phase difference experienced by the tap in that time interval; computing the sum of said quantities; and deriving the argument of said sum.

3. A method according to Claim 1, in which the first signal is derived for each time interval by computing for each tap a quantity, the phase of which is the phase difference experienced by that tap in that time interval; selecting the quantity corresponding to the tap having the highest amplitude; and deriving the argument of that quantity.

4. A method according to any preceding claim, in which the second signal is derived for each time interval by computing for each tap a quantity, the phase of which is the phase difference experienced by that tap in that time interval; computing the sum of the quantities; computing the average of the sum over time intervals related to the last burst and several previous bursts; and deriving the argument of the sum.

5. A method according to Claim 4, in which the third signal is derived from the difference between the first and second signals by squaring said difference; deriving the average of the squared value over time intervals related to the last burst and several previous bursts; and deriving the square root of the average.

6. A method according to any preceding claim, in which the channel impulse response is estimated at both edges of each time interval.

7. A method according to any preceding claim, in which a plurality of third signals are derived relating to the Doppler frequency shift of signals received by the base station receiver along different multipath channels.

8. A mobile telecommunications system comprising at least one mobile transmitter/receiver and a base station having a transmitter/receiver, the base station receiver having a channel equalizer (32), there being further provided first means (34, 52, 54, 56) to derive a first signal related to a phase variation, in a time interval which is a burst or a fraction of a burst, of one or more taps of an equivalent channel impulse response at the input of the equalizer;

   second means (34, 52, 58, 60) to derive a second signal related to the carrier frequency offset of the signal received in the base station receiver
   subtraction means (42) to subtract the second signal from the first signal;
   and calculation means (64, 66, 68) to calculate from the difference a third signal related to Doppler frequency shift of a signal received from a mobile transmitter/receiver.

9. A system according to Claim 8, in which the calculation means is arranged to calculate the speed of the mobile user.

10. A system according to Claim 8 or Claim 9, in which the calculation means is connected to allocation means in the base station by which a mobile user is allocated to a microcell or macrocell of the telecommunications system.

**Patentansprüche**

1. Verfahren der Bestimmung der Geschwindigkeit eines Mobilteilnehmers in einem mobilen Telekommunikationssystem mit folgenden Schritten:

   (a) Ableiten eines ersten, auf eine Phasenvariation bezogenen Signals in einem Zeitintervall, das ein Burst oder ein Bruchteil eines Bursts ist, einem oder mehreren Anzapfungen einer äquivalenten Kanalimpulsantwort am Eingang eines Kanalentzerrers in einem Basisstationsempfänger, der das Signal empfängt,

(b) Ableiten eines zweiten, auf den Trägerfrequenzversatz des am Basisstationsempfänger empfangenen Signals bezogenen Signals,

(c) Subtrahieren des zweiten Signals vom ersten Signal, und

(d) Ableiten eines dritten, auf die Doppler-Frequenzverschiebung bezogenen Signals aus der Differenz.

2. Verfahren nach Anspruch 1, bei dem das erste Signal für jedes Zeitintervall durch Berechnen einer Menge für jede Kanalanzapfung abgeleitet wird, deren Phase die von der Anzapfung in diesem Zeitintervall erfahrene Phasendifferenz ist; Berechnen der Summe der Mengen; und Ableiten des Arguments der Summe.

3. Verfahren nach Anspruch 1, bei dem das erste Signal für jedes Zeitintervall durch Berechnen einer Menge für jede Anzapfung abgeleitet wird, deren Phase die durch diese Anzapfung in diesem Zeitintervall erfahrene Phasendifferenz ist; Auswählen der der Anzapfung mit der höchsten Amplitude entsprechenden Menge; und Ableiten des Arguments dieser Menge.

4. Verfahren nach einem der vorhergehenden Ansprüche, bei dem das zweite Signal für jedes Zeitintervall durch Berechnen einer Menge für jede Anzapfung abgeleitet wird, deren Phase die durch diese Anzapfung in diesem Zeitintervall erfahrene Phasendifferenz ist; Berechnen der Summe der Mengen; Berechnen des Mittelwerts der Summe über die auf den letzten Bursts und mehrere vorhergehende Bursts bezogene Zeitintervalle; und Ableiten des Arguments der Summe.

5. Verfahren nach Anspruch 4, bei dem das dritte Signal aus der Differenz zwischen dem ersten und zweiten Signal durch Quadrieren der Differenz abgeleitet wird; Ableiten des Mittelwerts des quadrierten Werts über auf den letzten Bursts und mehrere vorhergehende Bursts bezogene Zeitintervalle; und Ableiten der Quadratwurzel des Mittelwerts.

6. Verfahren nach einem der vorhergehenden Ansprüche, bei dem die Kanalimpulsantwort an beiden Rändern jedes Zeitintervalls geschätzt wird.

7. Verfahren nach einem der vorhergehenden Ansprüche, bei dem eine Mehrzahl von dritten Signalen abgeleitet werden, die sich auf die Doppler-Frequenzverschiebung von durch den Basisstationsempfänger entlang unterschiedlicher Mehrwegekanäle empfangenen Signalen beziehen.

8. Mobiltelekommunikationssystem mit mindestens einem mobilen Sender/Empfänger und einer Basisstation mit einem Sender/Empfänger, wobei der Basisstationsempfänger einen Kanalentzerrer (32) aufweist, wobei weiterhin erste Mittel (34, 52, 54, 56) zum Ableiten eines ersten, auf eine Phasenvariation bezogenen Signals in einem Zeitintervall, das ein Burst oder ein Bruchteil eines Bursts ist, von einer oder mehreren Anzapfungen einer äquivalenten Kanalimpulsantwort am Eingang des Entzerrers vorgesehen sind;
zweitem Mittel (34, 52, 58, 60) zum Ableiten eines zweiten, auf den Trägerfrequenzversatz des im Basisstationsempfänger empfangenen Signals;
Subtrahiermittel (42) zum Abziehen des zweiten Signals vom ersten Signal;
und Berechnungsmitteln (64, 66, 68) zum Berechnen eines dritten, auf die Doppler-Frequenzverschiebung eines, von einem mobilen Sender/Empfänger empfangenen Signals bezogenen Signals aus der Differenz.

9. System nach Anspruch 8, bei dem die Berechnungsmittel zum Berechnen der Geschwindigkeit des Mobilteilnehmers angeordnet sind.

10. System nach Anspruch 8 oder Anspruch 9, bei dem die Berechnungsmittel mit Zuteilungsmitteln in der Basisstation verbunden sind, durch die ein Mobilteilnehmer einer Mikrozelle oder Makrozelle des Telekommunikationssystems zugeteilt wird.

## EP 1 052 820 B1

**Revendications**

1. Procédé de détermination de la vitesse d'un utilisateur mobile dans un système de télécommunications mobiles comprenant les étapes de :

   (a) dérivée d'un premier signal lié à une variation de phase, dans un intervalle de temps qui est une rafale ou fraction de rafale, d'une ou de plusieurs prises d'une réponse impulsionnelle de canal équivalente à l'entrée d'un égaliseur de canal dans un récepteur de station de base qui reçoit le signal,
   (b) dérivée d'un deuxième signal lié au décalage de fréquence porteuse du signal reçu dans le récepteur de la station de base,
   (c) soustraction du deuxième signal du premier signal, et
   (d) dérivée, à partir de la différence, d'un troisième signal lié au décalage de fréquence Doppler.

2. Procédé selon la revendication 1, dans lequel le premier signal est dérivé pour chaque intervalle de temps en calculant pour chaque prise de canal une quantité, dont la phase est la différence de phase subie par la prise dans cet intervalle de temps ; en calculant la somme desdites quantités ; et en dérivant l'argument de ladite somme.

3. Procédé selon la revendication 1, dans lequel le premier signal est dérivé pour chaque intervalle de temps en calculant pour chaque prise une quantité, dont la phase est la différence de phase subie par cette prise dans cet intervalle de temps ; en sélectionnant la quantité correspondant à la prise ayant la plus haute amplitude ; et en dérivant l'argument de cette quantité.

4. Procédé selon l'une quelconque des revendications précédentes, dans lequel le deuxième signal est dérivé pour chaque intervalle de temps en calculant pour chaque prise une quantité, dont la phase est la différence de phase subie par cette prise dans cet intervalle de temps ; en calculant la somme des quantités ; en calculant la moyenne de la somme sur des intervalles de temps liés à la dernière rafale et à plusieurs rafales précédentes ; et en dérivant l'argument de la somme.

5. Procédé selon la revendication 4, dans lequel le troisième signal est dérivé de la différence entre les premier et deuxième signaux en mettant au carré ladite différence ; en dérivant la moyenne de la valeur carrée sur des intervalles de temps liés à la dernière rafale et à plusieurs rafales précédentes ; et en dérivant la racine carrée de la moyenne.

6. Procédé selon l'une quelconque des revendications précédentes, dans lequel la réponse impulsionnelle de canal est estimée aux deux bords de chaque intervalle de temps.

7. Procédé selon l'une quelconque des revendications précédentes, dans lequel est dérivée une pluralité de troisième signaux liés au décalage de fréquence Doppler de signaux reçus par le récepteur de station de base le long de canaux de trajets multiples différents.

8. Système de télécommunications mobiles comprenant au moins un émetteur/récepteur mobile et une station de base ayant un émetteur/récepteur, le récepteur de station de base ayant un égaliseur de canal (32), étant en outre fournis un premier moyen (34, 52, 54, 56) pour dériver un premier signal lié à une variation de phase, dans un intervalle de temps qui est une rafale ou une fraction de rafale, d'une ou de plusieurs prises d'une réponse impulsionnelle de canal équivalente à l'entrée de l'égaliseur ;
   un deuxième moyen (34, 52, 58, 60) pour dériver un deuxième moyen lié au décalage de fréquence porteuse du signal reçu dans le récepteur de station de base ;
   un moyen de soustraction (42) pour soustraire le deuxième signal du premier signal ;
   et un moyen de calcul (64, 66, 68) pour calculer à partir de la différence un troisième signal lié au décalage de fréquence Doppler d'un signal reçu à partir d'un émetteur/récepteur mobile.

9. Système selon la revendication 8, dans lequel le moyen de calcul est agencé pour calculer la vitesse de l'utilisateur mobile.

10. Système selon la revendication 8 ou la revendication 9, dans lequel le moyen de calcul est connecté à un moyen d'assignation dans la station de base par lequel un utilisateur mobile est assigné à une microcellule ou une macrocellule du système de télécommunications.

# FIG. 1A

# FIG. 1B

FIG. 2 DEPENDENCE OF THE DOPPLER SHIFT ESTIMATE (35) ON THE MAXIMUM
DOPPLER FREQUENCY FOR THE GSM TYPICAL URBAN CHANNEL.

GSM TYPICAL URBAN AREA (TU) CHANNEL MODEL

ESTIMATED DOPPLER SHIFT, $\psi_D$[Hz]

MAXIMUM DOPPLER FREQUENCY, $f_D$[Hz]

EP 1 052 820 B1

FIG. 3 DEPENDENCE OF THE DOPPLER SHIFT ESTIMATE (36) ON THE MAXIMUM DOPPLER FREQUENCY FOR THE GSM TYPICAL URBAN CHANNEL.

GSM TYPICAL URBAN AREA (TU) CHANNEL MODEL

ESTIMATED DOPPLER SHIFT, $\psi_D$[Hz]

MAXIMUM DOPPLER FREQUENCY, $f_D$[Hz]

# FIG. 4

CARRIER OFFSET ESTIMATE (45) FOR A RECEIVED SIGNAL LEVEL OF -84 dBm AND IDEAL
FREQUENCY HOPPING. ACTUAL CARRIER OFFSET EQUAL TO 0 Hz. AVERAGE OVER $M$=500 BURSTS.

TU CHANNEL, P = -84 dBm, FH; CARRIER OFFSET = 0 Hz

EP 1 052 820 B1

FIG. 5 CARRIER OFFSET ESTIMATE (45) FOR A RECEIVED SIGNAL LEVEL OF -84 dBm AND IDEAL FREQUENCY HOPPING. ACTUAL CARRIER OFFSET EQUAL TO 50 Hz. AVERAGE OVER $M$=500 BURSTS.

TU CHANNEL, P = -84 dBm, FH; CARRIER OFFSET = 50 Hz

CARRIER OFFSET ESTIMATE, $v_k$ [Hz]

BURST INDEX, $k$

- - - 3 Km/h
—— 10 Km/h
—— 50 Km/h
—— 100 Km/h

FIG. 6 MEAN VALUE OF THE FREQUENCY OFFSET ESTIMATOR (45). SOLID AND DOTTED LINES INDICATE AN ACTUAL CARRIER FREQUENCY OFFSET OF 0 Hz AND 50Hz, RESPECTIVELY.

TU CHANNEL, FH

MEAN OF THE ESTIMATED CARRIER OFFSET [Hz]

SIGNAL POWER [dBm]

o       3 Km/h
*      10 Km/h
◊      50 Km/h
□     100 Km/h
——     υ = 0Hz
- - -    υ = 50Hz

EP 1 052 820 B1

22

FIG. 7 STANDARD DEVIATION OF THE FREQUENCY OFFSET ESTIMATOR (45). SOLID AND DOTTED LINES INDICATE AN ACTUAL CARRIER OFFSET OF 0 Hz AND 50Hz, RESPECTIVELY. M=500.

EP 1 052 820 B1

FIG. 8 DOPPLER SHIFT ESTIMATE (40) FOR A RECEIVED SIGNAL LEVEL OF -84 dBm AND IDEAL FREQUENCY HOPPING. ACTUAL CARRIER OFFSET EQUAL TO 0 Hz. AVERAGE OVER $M$=500 BURSTS.

TU CHANNEL, P = -84 dBm, FH; CARRIER OFFSET = 0 Hz

DOPPLER SHIFT ESTIMATE, $\psi_{Dk}$ [Hz]

BURST INDEX, $k$

3 Km/h
10 Km/h
50 Km/h
100 Km/h

EP 1 052 820 B1

FIG. 9 DOPPLER SHIFT ESTIMATE (40) FOR A RECEIVED SIGNAL LEVEL OF -84 dBm AND IDEAL FREQUENCY HOPPING. ACTUAL CARRIER OFFSET EQUAL TO 50 Hz. AVERAGE OVER $M$=500 BURSTS.

TU CHANNEL, P = -84 dBm, FH; CARRIER OFFSET = 50 Hz

DOPPLER SHIFT ESTIMATE, $\psi_{Dk}$ [Hz]

BURST INDEX, $k$

Legend:
- - - 3 Km/h
——— 10 Km/h
——— 50 Km/h
——— 100 Km/h

EP 1 052 820 B1

TU CHANNEL, P = -104 dBm, FH; CARRIER OFFSET = 0 Hz

DOPPLER SHIFT ESTIMATE, $\psi_{Dk}$ [Hz]

BURST INDEX, $k$

Legend:
- - - 3 Km/h
——— 10 Km/h
——— 50 Km/h
——— 100 Km/h

EP 1 052 820 B1

FIG. 11 DOPPLER SHIFT ESTIMATE (40) FOR A RECEIVED SIGNAL LEVEL OF -104 dBm AND IDEAL FREQUENCY HOPPING. ACTUAL CARRIER OFFSET EQUAL TO 50 Hz. AVERAGE OVER $M$=500 BURSTS.

TU CHANNEL, P = -104 dBm, FH; CARRIER OFFSET = 50 Hz

Legend:
- - - 3 Km/h
—— 10 Km/h
—— 50 Km/h
—— 100 Km/h

y-axis: DOPPLER SHIFT ESTIMATE, $\psi_{Dk}$ [Hz]

x-axis: BURST INDEX, $k$

EP 1 052 820 B1

FIG. 12 MEAN VALUE OF THE DOPPLER SHIFT ESTIMATOR (40). SOLID AND DOTTED LINES INDICATE AN ACTUAL CARRIER FREQUENCY OFFSET OF 0 Hz AND 50Hz, RESPECTIVELY

EP 1 052 820 B1

FIG. 13 STANDARD DEVIATION OF THE DOPPLER SHIFT ESTIMATOR (40). SOLID AND DOTTED LINES INDICATE AN ACTUAL CARRIER FREQUENCY OFFSET OF 0 Hz AND 50Hz, RESPECTIVELY. M=500.

TU CHANNEL, FH

STD. DEVIATION OF THE ESTIM. DOPPLER SHIFT [Hz]

SIGNAL POWER [dBm]

○ 3 Km/h
* 10 Km/h
◇ 50 Km/h
□ 100 Km/h
——— $\upsilon = 0$Hz
- - - $\upsilon = 50$Hz

EP 1 052 820 B1

EP 1 052 820 B1

FIG. 14  MEAN VALUE OF THE DOPPLER SHIFT ESTIMATOR (41). SOLID AND DOTTED LINES
INDICATE AN ACTUAL CARRIER FREQUENCY OFFSET OF 0 Hz AND 50Hz, RESPECTIVELY.

TU CHANNEL, FH

## FIG. 15

STANDARD DEVIATION OF THE DOPPLER SHIFT ESTIMATOR (41). SOLID AND DOTTED LINES INDICATE AN ACTUAL CARRIER FREQUENCY OFFSET OF 0 Hz AND 50 Hz, RESPECTIVELY. $M$=500.

TU CHANNEL, FH

STD. DEVIATION OF THE ESTIM. DOPPLER SHIFT [Hz]

SIGNAL POWER [dBm]

EP 1 052 820 B1

# FIG. 16

EQUALIZER 32

CHANNEL ESTIMATION AND TRACKING 34

CARRIER OFFSET ESTIMATION 36

DOPPLER SHIFT ESTIMATION 40

ALLOCATION OF MOBILE USER 38

EP 1 052 820 B1

FIG. 17

EP 1 052 820 B1